# EUROPÄISCHE PATENTSCHRIFT

(11) **EP 2 984 352 B1**
(45) Veröffentlichungstag und Bekanntmachung des Hinweises auf die Patenterteilung: **24.06.2020**
(21) Anmeldenummer: 14719645.5
(22) Anmeldetag: 31.03.2014
(51) Int. Cl.: F16B 11/00, C09J 5/00

(54) **VORRICHTUNG UND VERFAHREN ZUR AUSBILDUNG EINER KLEBEVERBINDUNG ZWISCHEN EINEM GEGENSTAND UND EINER AUFLAGE**
DEVICE AND METHOD FOR FORMING AN ADHESIVE CONNECTION BETWEEN AN ARTICLE AND A SUPPORT
DISPOSITIF ET PROCÉDÉ POUR RÉALISER UN ASSEMBLAGE COLLÉ ENTRE UN OBJET ET UN SUPPORT

(30) Priorität: 09.04.2013 DE 202013101505 U; 04.06.2013 DE 202013005065 U; 05.07.2013 DE 202013102982 U
(43) Veröffentlichungstag der Anmeldung: 17.02.2016
(73) Patentinhaber: Aufrecht GmbH, 71563 Affalterbach (DE)
(72) Erfinder: ORTWEIN, Angelika, 73061 Ebersbach (DE)
(74) Vertreter: Ruckh, Rainer Gerhard
(86) Internationale Anmeldenummer: PCT/EP2014/056411
(87) Internationale Veröffentlichungsnummer: WO 2014/166773

(56) Entgegenhaltungen:
- EP-A1- 0 900 944
- WO-A1-84/02960
- WO-A1-2007/021170
- WO-A1-2009/156013
- DE-C1- 4 427 055
- DE-U1-202009 003 176

## Beschreibung

Die Erfindung betrifft eine Vorrichtung und ein Verfahren zur Ausbildung einer Klebeverbindung zwischen einem Gegenstand und einer Auflage.

Derartige Gegenstände können zum Beispiel von Ausstattungsgegenständen und Accessoires im Sanitärbereich gebildet sein.

Bislang wurden derartige Gegenstände an Wänden von Gebäuden mit Schrauben und Dübeln befestigt. Nachteilig hierbei ist, dass in die Wände, die üblicherweise mit Fliesen verkleidet sind, Löcher eingebohrt werden müssen. Wird der Anbringungsort der Gegenstände nachträglich geändert, liegen die Bohrungen frei, was den optischen Gesamteindruck der Wand erheblich beeinträchtigt.

Aus der WO 2009/156013 A1 ist ein Befestigungsmittel zur Fixierung zweier Gegenstände bekannt, welches aus einer Mischung aus einem aeroben Klebstoff und einem hydrophilen Stoff besteht. Damit können Gegenstände ohne Schrauben mittels Klebeverbindungen auf Wänden aufgebracht werden.

Für die Anwendung des Befestigungsmittels ist es wesentlich, dass die Komponenten des Befestigungsmittels erst kurz vor Gebrauch des Befestigungsmittels zusammengemischt werden.

Hierzu wird ein Montageset bereitgestellt, welches zwei Aufnahmen zur getrennten Lagerung des aeroben Klebstoffs und des hydrophilen Stoffs, insbesondere der hydrophilen Trägerfaser, aufweist. Aus diesen Aufnahmen können dann die Komponenten in gewünschter Menge zur Anmischung des Befestigungsmittels entnommen werden.

Nachteilig hierbei ist, dass dieses Montageset eine Anzahl von Einzelteilen umfasst, welche als zusätzliche Einheit bei der Montage derartiger Systeme mitgeführt werden müssen.

Die DE 44 27 055 C1 betrifft eine Patrone zur Befestigung von Gegenständen an Flächen. Die Patrone weist einen Raum zur Aufnahme eines Klebstoffs auf, der mit einer Haut verschließbar ist, wobei durch Druck auf die Patrone eine Öffnung in der Haut erzeugt wird, durch die der Klebstoff ausbringbar ist. Zur Ausbildung einer Befestigungsvorrichtung kann die Patrone in einen Gegenstand eingesetzt werden.

Die DE 20 2009 003 176 U1 betrifft ein Befestigungsmittel zur Fixierung zweier Gegenstände, umfassend einen einkomponentigen aeroben Klebstoff, welchem dosiert Feuchtigkeit zuführbar ist, bevor mit diesem die Gegenstände fixiert sind, so dass der mit Feuchtigkeit versetzte Klebstoff bei aneinander geklebten Gegenständen aushärten kann. Zur Feuchtigkeitszufuhr wird ein geeignetes Werkzeug wie zum Beispiel ein Spatel benötigt.

Die WO 84/02960 A1 betrifft einen Befestiger, der einen Körper mit einer Öffnung aufweist. In dem Körper ist ein Klebstoff gekapselt gelagert. Durch einen im Körper verschiebbar gelagerten Stößel kann Druck auf den Klebstoff ausgeübt werden, so dass dieser aus der Kapselung befreit und über die Öffnung ausgegeben wird und dann eine Klebeverbindung mit einem Substrat bildet.

Der Erfindung liegt die Aufgabe zugrunde, eine Vorrichtung und ein Verfahren bereitzustellen, welche mit einem möglichst geringen Montageaufwand die Herstellung von Klebeverbindungen zwischen Gegenständen und Auflagen ermöglichen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Vorrichtung zur Ausbildung einer Klebeverbindung zwischen einem Gegenstand und einer Auflage. Der Gegenstand weist ein Reservoir mit einem Klebemittel auf, welches mit einer eine Sollbruchstelle aufweisenden Wand an eine Kontaktfläche angrenzt. Der Gegenstand weist einen Knopf mit einem diesem zugeordneten Durchstoßmittel auf, wobei durch Betätigen des Knopfs das Durchstoßmittel einen Durchbruch in der Sollbruchstelle der Wand des Reservoirs generiert, durch welchen Klebemittel aus dem Reservoir auf die Kontaktfläche geleitet ist und eine Klebeschicht zur Befestigung des Gegenstands auf der Auflage ausbildet. Das Reservoir weist zwei getrennte Aufnahmen auf. In einer ersten Aufnahme ist ein aerober Klebstoff als erste Komponente des Klebemittels gelagert. In einer zweiten Aufnahme ist Flüssigkeit oder ein hydrophiler Stoff, welchem dosiert Feuchtigkeit zugegeben ist, als zweite Komponente des Klebemittels gelagert. Bei Betätigen des Knopfs werden die Aufnahmen aufgebrochen, so dass die Komponenten des Klebemittels vermischt werden.

Weiterhin betrifft die Erfindung ein entsprechendes Verfahren.

Der Grundgedanke der Erfindung besteht somit darin, das zur Fixierung an der Auflage benötigte Klebemittel im Gegenstand selbst zu lagern. Die Freisetzung des Klebemittels erfolgt auf einfache Weise auf Knopfdruck, das heißt durch Betätigen eines am oder im Gegenstand selbst vorgesehenen Knopfs. Auf diesen Knopfdruck strömt das Klebemittel aus dem Reservoir auf die Kontaktfläche und bildet dort eine Klebeschicht, mittels derer der Gegenstand auf der Auflage befestigt werden kann. Die Klebeverbindung kann somit äußerst bedienerfreundlich, einfach und schnell hergestellt werden. Insbesondere ist vorteilhaft, dass keinerlei separate Einheiten oder Hilfsmittel wie Montagesets oder dergleichen benötigt werden um die Klebeverbindung herzustellen. Vielmehr ist zur Herstellung der Klebeverbindung von der Bedienperson allein der Knopf am Gegenstand zu betätigen. Der Knopf kann dabei allgemein als Druckknopf oder Drehknopf ausgebildet sein, das heißt der Knopf kann durch Drücken oder Drehen betätigt werden.

Die Funktionsweise zur Ausbildung der Klebeschicht ist derart, dass durch das Betätigen des Knopfs ein Durchstoßmittel so betätigt, das heißt bewegt wird, dass dieses Durchstoßmittel eine Sollbruchstelle einer Wand des Reservoirs durchstößt, so dass über den so gebildeten Durchbruch das Klebemittel selbsttätig aus dem Reservoir zur Kontaktfläche strömt und dort die Klebeschicht ausbildet.

Vorteilhaft ist das Durchstoßmittel von einem Dorn oder einer Spitze gebildet.

Weiter vorteilhaft ist die vom Durchstoßmittel durchstoßbare Sollbruchstelle der Wand von einer Folie, einer Membran oder einem Wandelement aus einem porösen Werkstoff gebildet.

Gemäß einer vorteilhaften Ausgestaltung ist der Gegenstand mittels Vorfixierungsmittel an der Auflage vorfixiert.

Die Vorfixierungsmittel können beispielsweise von einem Klebestreifen am Gegenstand gebildet sein, mittels dessen der Gegenstand in seiner Sollposition an der Auflage vorfixiert wird. Die Kontaktfläche und die Auflagefläche begrenzen dann einen geschlossenen Hohlraum, in welchen das Klebemittel nach Betätigen des Knopfs einströmen kann.

Gemäß einer ersten Variante der Erfindung sind der Knopf und das Reservoir integraler Bestandteil des Gegenstands, das heißt bereits während des Fertigungsprozesses des Gegenstands werden der Knopf und das zugeordnete Reservoir mit Klebemittel in diesem integriert.

Gemäß einer zweiten Variante der Erfindung bildet das Reservoir mit dem Knopf ein in einem Gegenstand gelagerte Baugruppe.

Diese Baugruppe wird nachträglich im Gegenstand eingebaut. Demzufolge wird im Fertigungsprozess des Gegenstands eine Aussparung vorgesehen, in welche dann die Baugruppe nachträglich eingesetzt werden kann. Die Baugruppe bildet somit ein Insert-Bauteil, wobei dieses vorteilhaft so ausgebildet ist, dass dieses für unterschiedliche Gegenstände eingesetzt werden kann.

Vorteilhaft wird die Baugruppe im Gegenstand werkzeuglos montiert.

Insbesondere ist die Baugruppe im Gegenstand durch einen Formschluss, Kraftschluss, eine Steckverbindung, Rastverbindung, Clipsverbindung, Klebeverbindung, Klettverbindung, Schraubverbindung befestigt.

Gemäß einer ersten Ausgestaltung der Erfindung bildet der Knopf ein bezüglich des Gegenstands bewegliches Teil.

In diesem Fall bildet der Knopf ein separates Teil, das gegen den Gegenstand bewegt wird. Das Reservoir ist dann bevorzugt fest mit dem Gegenstand verbunden.

Gemäß einer zweiten Ausgestaltung der Erfindung bildet der Gegenstand selbst den Knopf aus.

In diesem Fall ist das Reservoir im Gegenstand beweglich gelagert.

In diesem Fall muss zur Ausbildung des Knopfs kein separates Teil vorgesehen sein, da der Gegenstand selbst die Funktion des Knopfs übernimmt.

Insbesondere bei dieser Variante ist bei betätigtem Knopf der Gegenstand relativ zum Reservoir justierbar.

Vorteilhaft wird dabei der Gegenstand als Knopf durch Drücken gegen das Reservoir gedrückt, wodurch sich die Klebeschicht an der Kontaktfläche ausbildet und der Gegenstand an der Auflage befestigt wird. In dem befestigten Zustand kann dann noch der Gegenstand justiert werden, indem er noch relativ zum feststehenden Reservoir insbesondere durch eine Drehbewegung justiert werden kann, wodurch die Funktionalität des Gesamtsystems noch weiter erhöht werden kann.

Gemäß einer weiteren Variante der Erfindung besteht das Klebemittel aus einem aeroben Klebstoff, welchem dosiert Feuchtigkeit zugeführt ist.

In diesem Fall wird ein Klebemittel verwendet, wie es aus der DE 10 2009 003 176 A1 bekannt ist.

In diesem Fall weist das Reservoir zwei getrennte Aufnahmen auf, wobei in einer ersten Aufnahme der aerobe Klebstoff und in der zweiten Aufnahme Flüssigkeit, insbesondere Wasser, gelagert ist. Bei Betätigen des Knopfs werden dann die Aufnahmen aufgebrochen, so dass sich die Komponenten des Klebemittels vermischen können.

Gemäß einer zweiten Variante der Erfindung besteht das Klebemittel aus einem aeroben Klebstoff und einem hydrophilen Stoff, welchem vorteilhaft dosiert Feuchtigkeit zugegeben ist. Beispielsweise kann der hydrophile Stoff von einer hydrophilen Trägerfaser, insbesondere ungetrockneter Baumwolle, gebildet sein.

In diesem Fall wird ein Klebemittel verwendet, wie es in der WO 2009/156013 A1 beschrieben ist.

Auch in diesem Fall sind die Komponenten des Klebstoffs in getrennten Aufnahmen des Reservoirs gelagert, wobei bei Betätigen des Knopfs diese Aufnahmen aufgebrochen werden, so dass sich diese Komponenten zur Ausbildung des Klebemittels vermischen können.

Gemäß einer von der Erfindung nicht umfassten Variante ist im Reservoir ein aerober Klebstoff gelagert. An der Kontaktfläche ist eine hydrophile Einlage vorgesehen, der bevorzugt dosiert Feuchtigkeit zugeführt ist. Bei Betätigen des Knopfs strömt der aerobe Klebstoff aus dem Reservoir und kommt in Kontakt mit der hydrophilen Einlage.

In diesem Fall wird ein Klebemittel verwendet, wie es aus der WO 2013/017419 A2 bekannt ist. Vorteilhaft werden für die angeführten Klebemittel aerobe Klebstoffe verwendet, die von silanen Polymeren gebildet sind.

Die Erfindung kann zur Befestigung von Gegenständen aller Art eingesetzt werden. Insbesondere können die Gegenstände von Möbeln, Einrichtungsgegenständen und dergleichen gebildet sein. Weiterhin können die Gegenstände von Produkten im Küchen- und Sanitärbereich gebildet sein.

Die Erfindung wird im Folgenden anhand der Zeichnungen erläutert. Es zeigen:
- Figur 1:: Erstes Ausführungsbeispiel der erfindungsgemäßen Vorrichtung in einer Brausestange
a) bei nicht betätigtem Knopf
b) während Betätigen des Knopfs
c) nach Betätigen des Knopfs
- Figur 2:: Erste Variante einer erfindungsgemäßen Vorrichtung bei einem Rohrclip
a) Schnittdarstellung des Rohrclips
b) Draufsicht auf die Unterseite des Rohrclips
- Figur 3:: Zweite Variante der erfindungsgemäßen Vorrichtung bei einem Rohrclip.

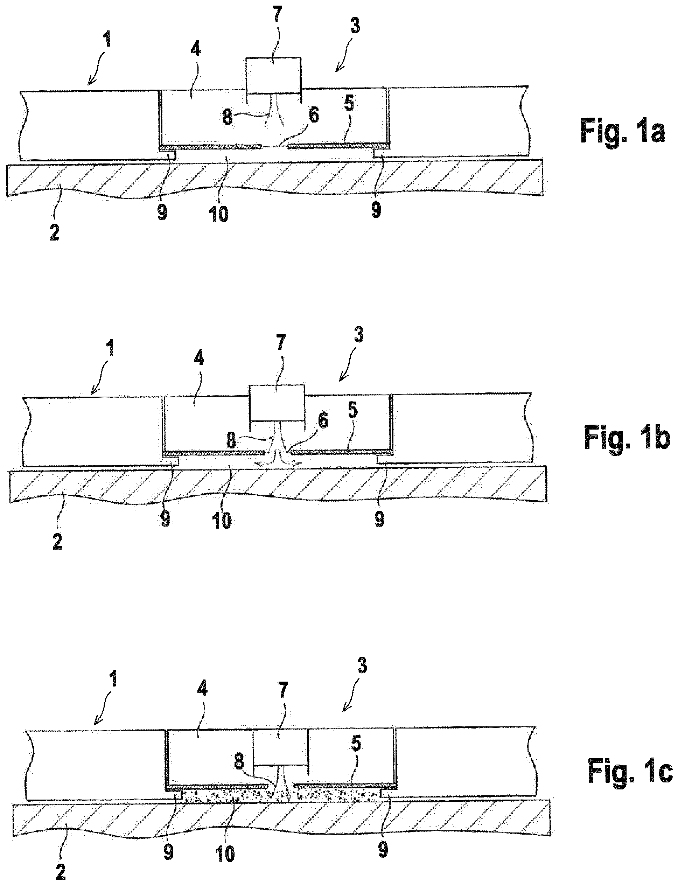

Die Figuren 1a bis 1c zeigen einen Ausschnitt einer einen Gegenstand bildenden Brausestange 1, die an einer eine Auflage bildenden Wand 2 durch Klebeverbindungen befestigt wird.

Die Figuren 1a bis 1c zeigen eine Aussparung der Brausestange 1, in welche als Insert-Bauteil 3 die erfindungsgemäße Vorrichtung zur Ausbildung der Klebeverbindung eingesetzt und durch eine nicht dargestellte Rastverbindung lagefixiert ist. Generell können an der Brausestange 1 mehrere derartige Vorrichtungen vorgesehen sein.

Die Vorrichtung umfasst ein Reservoir 4, in welchem ein aerober Klebstoff gelagert ist. An der Unterseite des Reservoirs 4 ist eine hydrophile Platte 5 gelagert, welcher dosiert Feuchtigkeit zugeführt ist. Die hydrophile Platte 5 weist in ihrem Zentrum eine Bohrung auf. Hinter dieser Bohrung liegt eine Membran 6, die eine Sollbruchstelle der Wand 2 des Reservoirs 4 bildet. In der Wand 2 an der Oberseite des Reservoirs 4 ist ein Knopf 7 gelagert. Der Knopf 7 ist bei Betätigen in axialer Richtung verschiebbar, das heißt der Knopf 7 ist als Druckknopf ausgebildet. An der Unterseite des Knopfs 7 ist als Durchstoßmittel ein Dorn 8 gelagert.

Wie die Figuren 1a bis 1c zeigen, liegt die Brausestange 1 auf der Wand 2 auf und ist an dieser mittels nicht dargestellter Klebesteifen in ihrer Sollposition fixiert. Der die Aussparung begrenzende Rand der Brausestange 1 weist zwei Vorsprünge 9 auf, auf welchen die Vorrichtung aufsitzt. Dadurch entsteht zwischen der Vorrichtung und der Wand 2 ein geschlossener Hohlraum 10. Die Vorsprünge 9 sind so dimensioniert, dass die Oberseite der Vorrichtung bündig mit der Oberseite der Brausestange 1 abschließt.

Figur 1a zeigt die Anordnung, solange der Knopf 7 noch nicht betätigt ist, das heißt, der Knopf 7 steht weit über die Oberseite des Reservoirs 4 hervor. Dadurch ist der Dorn 8 nicht in Eingriff mit der Membran 6. Durch die nicht beschädigte Membran 6 ist das Reservoir 4 vollständig geschlossen, so dass der aerobe Klebstoff vollständig in diesem gelagert ist.

Figur 1b zeigt die Anordnung während des Betätigens des Knopfs 7. Der Knopf 7 wird dadurch nach unten gedrückt, so dass der Dorn 8 in Kontakt mit der Membran 6 kommt und diese durchstößt. Durch den Durchbruch in der Membran 6 kann der aerobe Klebstoff austreten und fließt in den Hohlraum 10, wie die Pfeile in Figur 1b veranschaulichen.

Figur 1c zeigt den Endzustand, wenn der Knopf 7 vollständig in das Reservoir 4 eingedrückt ist, so dass die Oberseite des Knopfs 7 bündig mit der Oberseite des Reservoirs 4 abschließt Der aerobe Klebstoff ist nun aus dem Reservoir 4 entwichen, so dass er den Hohlraum 10 ausfüllt. Dort bildet der aerobe Klebstoff mit der hydrophilen Platte ein Klebemittel, das in dem vollständig gekapselten Hohlraum 10 aushärten kann, wodurch die in Figur 1c dargestellte Klebeschicht 11 gebildet wird, mit der die Brausestange 1 an der Wand 2 fixiert ist.

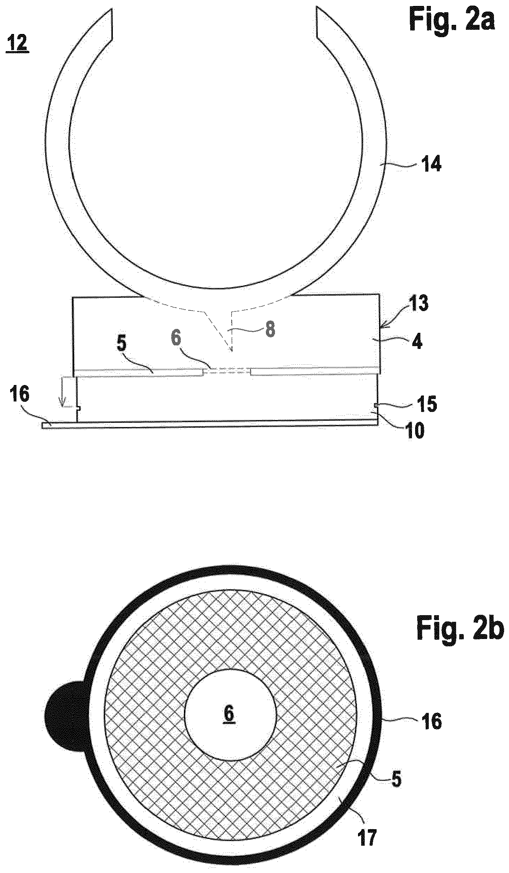

Die Figuren 2a und 2b zeigen einen Gegenstand in Form eines Rohrbefestigers 12. Der Rohrbefestiger 12 weist einen hohlzylindrischen Sockel 13 auf, auf dessen geschlossener Oberseite ein Clip 14 befestigt ist, der zur Aufnahme eines nicht dargestellten Rohrs dient. Das Reservoir 4 ragt über die offene Unterseite in den Hohlraum 10 des Sockels 13. Das Reservoir 4 mit dem darin gelagerten aeroben Klebstoff und dem darin angeordneten Dorn 8 und der Membran 6 an der Unterseite entspricht der Ausführungsform der Figuren 1a bis 1c. In weiterer Übereinstimmung mit dieser Ausführungsform ist an der Unterseite des Reservoirs 4 eine hydrophile Platte 5 vorgesehen, wobei hinter der Bohrung in der hydrophilen Platte die Membran 6 freiliegt. Die hydrophile Platte 5 ist gegenüber dem Rand des Reservoirs 4 nach innen versetzt. An der äußeren Mantelfläche des Reservoirs 4 ist eine in Umfangsrichtung verlaufende Nut 15 vorgesehen. Auf dem unteren Rand des Reservoirs 4 befindet sich eine Abdeckung 16, die einen Klebestreifen verdeckt. An die hydrophile Platte 5 schließt eine Überlaufrinne 17 an, in die überschüssiges Klebemittel einströmen kann.

Zur Fixierung des Rohrbefestigers 12 auf einer Auflage wird zunächst die Abdeckung 16 abgenommen und dann der untere Rand des Reservoirs 4 mit dem Klebestreifen als Vorfixierungsmittel auf die Auflage aufgesetzt und dort vorfixiert.

Dadurch wird zwischen hydrophiler Platte und Auflage ein geschlossener Hohlraum 10 gebildet. Im vorliegenden Fall erfüllt der gesamte Rohrbefestiger 12 die Knopfunktion, indem dieser in axialer Richtung gegen das Reservoir 4 vorschoben wird, bis der untere Rand des Sockels 13 hörbar in der Nut 15 einrastet. Durch diese Knopfbetätigung wird die Membran 6 vom Dorn 8 durchstoßen und es fließt wieder aerober Klebstoff aus dem Reservoir 4 in den Hohlraum 10 zwischen hydrophiler Platte und Aufnahme. Dadurch bildet sich wieder eine Klebeschicht 11 aus, mit der der Gegenstand, das heißt in diesem Fall der Rohrbefestiger 12, an der Auflage fixiert ist.

Der Rohrbefestiger 12 kann dann noch in der Nut 15 gedreht werden und so justiert werden. Eine Justageposition kann mit einem nicht dargestellten Stift fixiert werden.

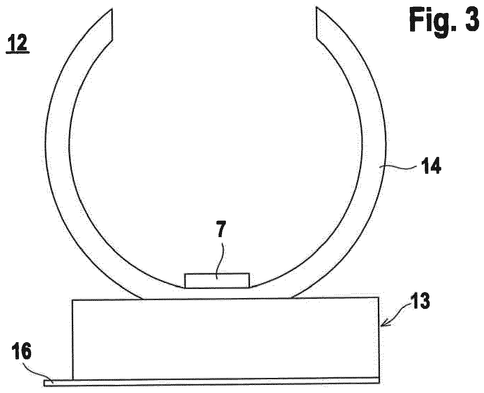

Figur 3 zeigt eine Variante des Rohrbefestigers 12 gemäß den Figuren 2a und 2b. In diesem Fall ist das Reservoir 4 vollständig im Hohlraum 10 des Sockels 13 gelagert, wobei das Reservoir 4 dort befestigt und somit nicht verschiebbar zum Sockel 13 ist. Das Reservoir 4 mit der hydrophilen Platte (in Figur 3 nicht dargestellt) liegt im Inneren des Hohlraums 10 und ist bezüglich des Randes des Sockels 13 nach innen versetzt. In diesem Fall ist auf dem unteren Rand des Sockels 13 ein Klebestreifen aufgebracht, der mit der Abdeckung 16 verdeckt ist.

Zur Montage des Rohrbefestigers 12 wird dieser mit dem Klebestreifen am unteren Rand des Sockels 13 auf die Auflage aufgesetzt und dort vorfixiert. Bei der Ausführungsform gemäß Figur 3 übernimmt ein Knopf 7 als separates Bauteil die Knopffunktion. Durch Betätigen des am Clip 14 freiliegenden Knopfs 7 durchstößt der Dorn 8 die Membran 6, so dass der aerobe Klebstoff zur Ausbildung der Klebeschicht 11 aus dem Reservoir 4 ausströmen kann.

### Bezugszeichenliste

- (1): Brausestange
- (2): Wand
- (3): Insert-Bauteil
- (4): Reservoir
- (5): hydrophile Platte
- (6): Membran
- (7): Knopf
- (8): Dorn
- (9): Vorsprung
- (10): Hohlraum
- (11): Klebeschicht
- (12): Rohrbefestiger
- (13): Sockel
- (14): Clip
- (15): Nut
- (16): Abdeckung
- (17): Überlaufrinne

## Patentansprüche

1. Vorrichtung zur Ausbildung einer Klebeverbindung zwischen einem Gegenstand und einer Auflage, wobei der Gegenstand ein Reservoir (4) mit einem Klebemittel aufweist, welches mit einer eine Sollbruchstelle aufweisenden Wand an eine Kontaktfläche angrenzt, und wobei der Gegenstand einen Knopf (7) mit einem diesem zugeordneten Durchstoßmittel aufweist, wobei durch Betätigen des Knopfs das Durchstoßmittel einen Durchbruch in der Sollbruchstelle der Wand des Reservoirs (4) generiert, durch welchen Klebemittel aus dem Reservoir (4) auf die Kontaktfläche geleitet ist und eine Klebeschicht (11) zur Befestigung des Gegenstands auf der Auflage ausbildet, **dadurch gekennzeichnet, dass** das Reservoir (4) zwei getrennte Aufnahmen aufweist, dass in einer ersten Aufnahme aerober Klebstoff als erste Komponente des Klebemittels gelagert ist, dass in einer zweiten Aufnahme Flüssigkeit oder ein hydrophiler Stoff, welchem dosiert Feuchtigkeit zugegeben ist, als zweite Komponente des Klebemittels gelagert ist, und dass bei Betätigen des Knopfs (7) die Aufnahmen aufgebrochen werden, so dass die Komponenten des Klebemittels vermischt werden.

2. Vorrichtung nach Anspruch 1, **dadurch gekennzeichnet, dass** das Durchstoßmittel von einem Dorn (8) oder einer Spitze gebildet ist.

3. Vorrichtung nach einem der Ansprüche 1 oder 2, **dadurch gekennzeichnet, dass** die vom Durchstoßmittel durchstoßbare Sollbruchstelle der Wand von einer Folie, einer Membran (6) oder einem Wandelement aus einem porösen Werkstoff gebildet ist.

4. Vorrichtung nach einem der Ansprüche 1 bis 3, **dadurch gekennzeichnet, dass** der Gegenstand mittels eines Vorfixierungsmittels an der Auflage vorfixiert ist.

5. Vorrichtung nach einem der Ansprüche 1 bis 4, **dadurch gekennzeichnet, dass** das Reservoir (4) mit dem Knopf (7) ein in einem Gegenstand gelagerte Baugruppe bildet.

6. Vorrichtung nach Anspruch 5, **dadurch gekennzeichnet, dass** die Baugruppe im Gegenstand werkzeuglos montiert ist.

7. Vorrichtung nach einem der Ansprüche 5 oder 6, **dadurch gekennzeichnet, dass** die Baugruppe im Gegenstand durch einen Formschluss, Kraftschluss, eine Steckverbindung, Rastverbindung, Clipsverbindung, Klebeverbindung, Klettverbindung, Schraubverbindung befestigt ist.

8. Vorrichtung nach einem der Ansprüche 1 bis 7, **dadurch gekennzeichnet, dass** der Knopf (7) ein bezüglich des Gegenstands bewegliches Teil bildet.

9. Vorrichtung nach einem der Ansprüche 1 bis 7, **dadurch gekennzeichnet, dass** der Gegenstand selbst den Knopf (7) ausbildet.

10. Vorrichtung nach Anspruch 9, **dadurch gekennzeichnet, dass** das Reservoir (4) im Gegenstand beweglich gelagert ist.

11. Vorrichtung nach einem der Ansprüche 9 oder 10, **dadurch gekennzeichnet, dass** bei betätigtem Knopf (7) der Gegenstand relativ zum Reservoir (4) justierbar ist.

12. Verfahren zur Ausbildung einer Klebeverbindung zwischen einem Gegenstand und einer Auflage, wobei im oder am Gegenstand ein Reservoir (4) mit einem Klebemittel vorgesehen ist, welches mit einer eine Sollbruchstelle aufweisenden Wand an eine Kontaktfläche angrenzt, und wobei der Gegenstand einen Knopf (7) mit einem diesem zugeordneten Durchstoßmittel aufweist, wobei durch Betätigen des Knopfs (7) das Durchstoßmittel so betätigt wird, dass es einen Durchbruch in der Sollbruchstelle der Wand des Reservoirs (4) generiert, wobei durch den Durchbruch Klebemittel aus dem Reservoir (4) geleitet wird und dann auf die Kontaktfläche geleitet wird und dort eine Klebeschicht (11) bildet, mittels derer der Gegenstand auf der Auflage befestigt wird, **dadurch gekennzeichnet, dass** das Reservoir (4) zwei getrennte Aufnahmen aufweist, dass in einer ersten Aufnahme aerober Klebstoff als erste Komponente des Klebemittels gelagert ist, dass in einer zweiten Aufnahme Flüssigkeit oder ein hydrophiler Stoff, welchem dosiert Feuchtigkeit zugegeben ist, als zweite Komponente des Klebemittels gelagert ist, und dass bei Betätigen des Knopfs (7) die Aufnahmen aufgebrochen werden, so dass die Komponenten des Klebemittels vermischt werden.

## Claims

1. Device for forming an adhesive connection between an article and a support, wherein the article has a reservoir (4) with an adhesive, which reservoir adjoins a contact surface by a wall having a frangible location, and wherein the article has a head (7) with penetrating means associated therewith, wherein through actuation of the head the penetrating means produces a break-through in the frangible location of the wall of the reservoir (4), through which adhesive is conducted from the reservoir (4) onto the contact surface and forms an adhesive layer (11) for securing the article to the support, **characterised in that** the reservoir (4) has two separate receptacles, that an aerobic adhesive substance as a first component of the adhesive in a first receptacle, that liquid or a hydrophilic substance, to which a metered amount of moisture is added, is stored as second component of the adhesive is stored in a second receptacle and that when the head (7) is actuated the receptacles are broken open so that the components of the adhesive are mixed.

2. Device according to claim 1, **characterised in that** the penetrating means is formed by a mandrel (8) or a point.

3. Device according to one of claims 1 and 2, **characterised in that** the frangible location, which can be penetrated by the penetrating means, of the wall is formed by a foil, a membrane (6) or a wall element of a porous material.

4. Device according to any one of claims 1 to 3, **characterised in that** the article is prefixed to the support by way of a pre-fixing means.

5. Device according to any one of claims 1 to 4, **characterised in that** the reservoir (4) forms together with the head (7) a subassembly mounted in an article.

6. Device according to claim 5, **characterised in that** the subassembly is mounted in the article in tool-free manner.

7. Device according to one of claims 5 and 6, **characterised in that** the subassembly is secured in the article by a mechanically positive couple, a frictional couple, a plug connection, a detent connection, a clip connection, an adhesive connection, a hook-and-burr connection or a screw connection.

8. Device according to any one of claims 1 to 7, **characterised in that** the head (7) forms a part movable with respect to the article.

9. Device according to any one of claims 1 to 7, **characterised in that** the article itself forms the head (7).

10. Device according to claim 9, **characterised in that** the reservoir (4) is movably mounted in the article.

11. Device according to one of claims 9 and 10, **characterised in that** when the head (7) is actuated the article is adjustable relative to the reservoir (4).

12. Method for forming an adhesive connection between an article and a support, wherein a reservoir (4), which adjoins a contact surface by a wall having a frangible location, with an adhesive is provided in or at the article, and wherein the article has a head (7) with penetrating means associated therewith, wherein through actuation of the head (7) the penetrating means is so actuated that it produces a break-through in the frangible location of the wall of the reservoir (4), wherein adhesive from the reservoir (4) is conducted through the break-through and then is conducted onto the contact surface and forms thereat an adhesive layer (11) by means of which the article is secured to the support, **characterised in that** the reservoir (4) has two separate receptacles, that an aerobic adhesive substance as a first component of the adhesive is stored in a first receptacle, that liquid or a hydrophilic substance, to which a metered amount of moisture is added, as a second component of the adhesive is stored in a second receptacle and that when the head (7) is actuated the receptacles are broken open so that the components of the adhesive are mixed.

## Revendications

1. Dispositif réalisé pour instaurer une liaison collée entre un objet et un support, ledit objet étant muni d'un réservoir (4) qui renferme un agent d'adhérence et est limitrophe d'une surface de contact par une paroi présentant une zone de rupture par destination, et ledit objet comportant un bouton (7) pourvu d'un moyen perforateur qui lui est associé, sachant que ledit moyen perforateur engendre dans ladite zone de rupture par destination de la paroi du réservoir (4), suite à un actionnement dudit bouton, une perforation à travers laquelle de l'agent d'adhérence est canalisé vers la surface de contact à partir dudit réservoir (4), et forme une couche d'adhérence (11) dédiée à la fixation de l'objet sur le support, **caractérisé par le fait que** le réservoir (4) comprend deux logements séparés ; **par le fait qu'**un adhésif aérobie est stocké dans un premier logement, en tant que premier composant de l'agent d'adhérence ; **par le fait qu'**un liquide, ou une substance hydrophile à laquelle de l'humidité est ajoutée de manière dosée, est stocké(e) dans un second logement en tant que second composant dudit agent d'adhérence ; et **par le fait que** lesdits logements sont rompus lors d'un actionnement du bouton (7), de telle sorte que les composants dudit agent d'adhérence soient mélangés.

2. Dispositif selon la revendication 1, **caractérisé par le fait que** le moyen perforateur est formé d'un stylet (8) ou d'une pointe.

3. Dispositif selon l'une des revendications 1 ou 2, **caractérisé par le fait que** la zone de rupture par destination de la paroi, pouvant être perforée par le moyen perforateur, est constituée d'un film souple, d'une membrane (6) ou d'un élément de paroi en un matériau poreux.

4. Dispositif selon l'une des revendications 1 à 3, **caractérisé par le fait que** l'objet est bloqué à demeure sur le support, par anticipation, à l'aide d'un moyen d'assujettissement préalable.

5. Dispositif selon l'une des revendications 1 à 4, **caractérisé par le fait que** le réservoir (4) forme, avec le bouton (7), un groupe structurel intégré dans un objet.

6. Dispositif selon la revendication 5, **caractérisé par le fait que** le groupe structurel est monté dans l'objet sans aucun outillage.

7. Dispositif selon l'une des revendications 5 ou 6, **caractérisé par le fait que** le groupe structurel est fixé dans l'objet à l'aide d'un assemblage par conformation, d'un assemblage par engagement positif, d'une liaison par emboîtement, d'une liaison par encliquetage, d'une liaison par clipsage, d'une liaison par collage, d'une liaison par auto-agrippage, d'une liaison par vissage.

8. Dispositif selon l'une des revendications 1 à 7, **caractérisé par le fait que** le bouton (7) forme une partie mobile par rapport à l'objet.

9. Dispositif selon l'une des revendications 1 à 7, **caractérisé par le fait que** l'objet matérialise par lui-même le bouton (7).

10. Dispositif selon la revendication 9, **caractérisé par le fait que** le réservoir (4) est monté dans l'objet avec mobilité.

11. Dispositif selon l'une des revendications 9 ou 10, **caractérisé par le fait que** l'objet peut être ajusté par rapport au réservoir (4) lorsque le bouton (7) est actionné.

12. Procédé dévolu à l'instauration d'une liaison collée entre un objet et un support, sachant qu'un réservoir (4), prévu dans ou sur l'objet, renferme un agent d'adhérence et est limitrophe d'une surface de contact par une paroi présentant une zone de rupture par destination, ledit objet comportant un bouton (7) pourvu d'un moyen perforateur qui lui est associé, sachant qu'un actionnement dudit bouton (7) a pour effet d'actionner ledit moyen perforateur de façon telle qu'il engendre une perforation dans ladite zone de rupture par destination de la paroi du réservoir (4), de l'agent d'adhérence étant canalisé à travers ladite perforation, à partir dudit réservoir (4), pour être ensuite canalisé vers la surface de contact sur laquelle il forme une couche d'adhérence (11) au moyen de laquelle l'objet est fixé sur le support, **caractérisé par le fait que** le réservoir (4) comprend deux logements séparés ; **par le fait qu'**un adhésif aérobie est stocké dans un premier logement, en tant que premier composant de l'agent d'adhérence ; **par le fait qu'**un liquide, ou une substance hydrophile à laquelle de l'humidité est ajoutée de manière dosée, est stocké(e) dans un second logement en tant que second composant dudit agent d'adhérence ; et **par le fait que** lesdits logements sont rompus lors d'un actionnement du bouton (7), de telle sorte que les composants dudit agent d'adhérence soient mélangés.
